# EUROPÄISCHE PATENTSCHRIFT

(11) **EP 3 084 469 B1**
(45) Veröffentlichungstag und Bekanntmachung des Hinweises auf die Patenterteilung: **31.03.2021**
(21) Anmeldenummer: 14802418.5
(22) Anmeldetag: 21.11.2014
(51) Int. Cl.: G01S 15/931, G01S 7/52, G01S 7/529, G01S 15/87

(54) **ULTRASCHALLSENSOREINRICHTUNG FÜR EIN KRAFTFAHRZEUG, KRAFTFAHRZEUG UND ENTSPRECHENDES VERFAHREN**
ULTRASONIC SENSOR DEVICE FOR A MOTOR VEHICLE, MOTOR VEHICLE AND CORRESPONDING METHOD
DISPOSITIF DE DÉTECTION À ULTRASONS POUR VÉHICULE AUTOMOBILE, VÉHICULE AUTOMOBILE ET PROCÉDÉ CORRESPONDANT

(30) Priorität: 17.12.2013 DE 102013021328
(43) Veröffentlichungstag der Anmeldung: 26.10.2016
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE)
(74) Vertreter: Enge, Sebastian
(86) Internationale Anmeldenummer: PCT/EP2014/075241
(87) Internationale Veröffentlichungsnummer: WO 2015/090844

(56) Entgegenhaltungen:
- EP-A2- 2 124 070
- DE-A1- 4 208 595
- DE-A1-102011 121 092
- DE-A1-102012 201 920

## Beschreibung

Die Erfindung betrifft eine Ultraschallsensoreinrichtung für ein Kraftfahrzeug, mit einer Membran zum Aussenden und Empfangen von Ultraschallwellen, mit einem Anregungselement, beispielsweise einem Piezoelement, welches zum Bereitstellen eines elektrischen Empfangssignals beim Empfangen der Ultraschallwellen sowie zum Anregen der Membran zum Aussenden der Ultraschallwellen ausgebildet ist, mit einem Sender zum Abgeben von elektrischen Impulsen an das Anregungselement, und mit einem Empfänger zum Empfangen und Aufbereiten des elektrischen Empfangssignals. Die Erfindung betrifft außerdem ein Kraftfahrzeug mit einer solchen Ultraschallsensoreinrichtung, wie auch ein Verfahren zum Betreiben einer Ultraschallsensoreinrichtung eines Kraftfahrzeugs.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Vorliegend richtet sich das Interesse auf eine Diagnose eines Ultraschallsensors. Da heutige Ultraschallsensoren auch außerhalb der eigentlichen Parkhilfefunktionalität eingesetzt werden, wie beispielsweise zur Absicherung der Fahrzeugtüren beim Öffnen, ist es aus funktionaler Sicherheit immer wichtiger, eine Fehlfunktion eines Ultraschallsensors zu erkennen. Eine allgemeine Diagnose eines Ultraschallsensors ist dabei zum Beispiel aus dem Dokument DE 102 47 971 A1 bekannt. Zur Störungserkennung werden hier die Eigenfrequenz und die Ausschwingzeit des Ultraschallsensors ausgewertet.

Die herkömmliche Überprüfung der allgemeinen Funktionsweise eines Ultraschallsensors findet meistens nur innerhalb eines Steuergeräts im Rahmen einer Plausibilisierung statt. Das Steuergerät überprüft dabei beispielsweise die genannte Ausschwingzeit oder aber die Eigenfrequenz des Sensors. Es wird auch eine Überprüfung daraufhin durchgeführt, ob ein ausgesendetes Ultraschallsignal als Echo am Empfänger anliegt. Ist dieses vorhanden, wird der gesamte Ultraschallsensor als funktionsfähig bewertet, ohne eine qualitative Aussage über die Funktionsweise der jeweiligen Komponenten zu treffen. Anhand der Ausschwingzeit ist lediglich eine binäre Entscheidung möglich, ob der gesamte Ultraschallsensor ordnungsgemäß funktioniert oder nicht. Ob beispielsweise das elektrische Empfangssignal innerhalb des Sensors korrekt aufbereitet, beispielsweise verstärkt, wird, kann im Steuergerät nicht detektiert werden, da der Sensor lediglich binäre Nachrichtenimpulse an das Steuergerät übermittelt, wenn Zielechos detektiert werden. Ist die Verstärkung des Empfangssignals jedoch nicht ausreichend, können solche Zielechos unter Umständen nicht detektiert werden, und das Steuergerät geht trotzdem von einer korrekten Funktionsweise des Sensors aus.

Die DE 10 2012 201 920 A1 beschreibt ein Verfahren und ein dazugehöriges System zum detektieren von Objekten mittels Ultraschall, wobei Ultraschallpulse mittels eines resonanten Wandlerelements ausgesendet werden und von den Objekten reflektierte Echopulse empfangen werden und die die Echopulse umfassenden Empfangssignale mittels eines Empfangsverstärker verstärkt werden. Ferner wird ermittelt, ob bei einem Empfang der Empfangssignale eine Übersteuerung in dem den Empfangsverstärker umfassenden Empfangspfad vorliegt.

Die DE 42 08 595 A1 beschreibt eine Einrichtung zur Abstandsmessung mit Ultraschall, bei der ein Sender ein impulsförmiges Signal abgibt, das reflektiert wird und in einem Empfänger in ein elektrisches Echosignal gewandelt wird. Zur Vermeidung von Ungenauigkeiten bei der Auswertung, werden Veränderungen einer Schaltschwelle oder Veränderungen der Verstärkung des Echosignals in Abhängigkeit vom zuvor empfangenen Echosignal durchgeführt.

Die DE 10 2011 121 0 92 A1 beschreibt einen Sensor für ein Kraftfahrzeug, der in einem Testmodus Schaltbar ist und dazu eingerichtet ist, in dem Testmodus ein Testsignal auszugeben, wobei der Sensor dazu eingerichtet ist, in dem Testmodus das Testsignal unter Umgehung einer Kommunikationseinheit an einen Kommunikationsanschluss auszugeben.

Die EP 2 124 070 A2 beschreibt ein System zur Erkennung von bewegenden Objekten mit einem Sender, Empfänger, einem Schwingelement, einem Schalter und einer Steuerungseinrichtung. Die Steuerungseinrichtung weist eine Überwachungsphase und eine Prüfphase auf, wobei in der Überwachungsphase ein erstes Schwingungssignal an den Sender ausgegeben wird und in der Prüfphase ein Prüfsignal an den Empfänger ausgegeben wird.

Es ist Aufgabe der Erfindung, eine Ultraschallsensoreinrichtung, ein Kraftfahrzeug sowie ein Verfahren bereitzustellen, bei denen Maßnahmen getroffen sind, die eine weitergehende Aussage über die Funktionsfähigkeit der Ultraschallsensoreinrichtung ermöglichen.

Diese Aufgabe wird erfindungsgemäß durch eine Ultraschallsensoreinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Ultraschallsensoreinrichtung für ein Kraftfahrzeug umfasst eine Membran, welche zum Aussenden und Empfangen von Ultraschallwellen dient. Ein Anregungselement ist zum Bereitstellen eines elektrischen Empfangssignals beim Empfangen der Ultraschallwellen durch die Membran ausgebildet. Das Anregungselement dient auch zum Anregen der Membran zum Aussenden der Ultraschallwellen aufgrund von elektrischen Impulsen, welche mittels eines Senders bereitgestellt und an das Anregungselement abgegeben werden. Ein Empfänger dient zum Empfangen und Aufbereiten des elektrischen Empfangssignals. Das Anregungselement kann beispielsweise ein piezoelektrisches Element sein. Erfindungsgemäß ist vorgesehen, dass die Ultraschallsensoreinrichtung eine Diagnoseeinheit aufweist, welche dazu ausgelegt ist, eine Diagnose des Empfängers durchzuführen und hierdurch den Empfänger auf seine Funktionsfähigkeit hin zu überprüfen.

Erfindungsgemäß wird also eine explizite Diagnose des Empfängers selbst durchgeführt, so dass speziell in Bezug auf den Empfänger festgestellt wird, ob dieser ordnungsgemäß funktioniert oder aber einen Fehler aufweist. So kann es beispielsweise vorkommen, dass durch Auswertung der Ausschwingzeit der Membran die gesamte Einrichtung zwar als funktionsfähig bewertet wird, jedoch die explizite Diagnose des Empfängers beispielsweise ergibt, dass eine Verstärkung des elektrischen Empfangssignals aufgrund eines internen Fehlers des Empfängers fehlerhaft, beispielsweise zu schwach, ist. Solche Situationen können nun im Rahmen der separaten Diagnose des Empfängers detektiert und gegebenenfalls Fehlermeldungen ausgegeben werden. Anhand der Länge eines vom Sensor übermittelten Nachrichtenimpulses kann ein Steuergerät nämlich lediglich die allgemeine Ausschwingzeit der Membran bestimmen und die allgemeine Funktionsfähigkeit des Sensors überprüfen. Erst eine interne Diagnose des Empfängers ermöglicht jedoch weitergehende Aussagen darüber, ob die gesamte Ultraschallsensoreinrichtung bestimmungsgemäß funktioniert und Zielobjekte somit zuverlässig detektiert werden können.

In einer Ausführungsform ist vorgesehen, dass der Empfänger einen Verstärker, insbesondere einen analogen Verstärker, zum Verstärken des elektrischen Empfangssignals umfasst und die Diagnoseeinheit dazu ausgelegt ist, im Rahmen der Diagnose den Verstärker auf seine Funktionsfähigkeit hin zu überprüfen. Somit kann festgestellt werden, ob der Verstärker das elektrische Empfangssignal überhaupt mit der benötigten Verstärkung verstärken kann und somit die Zielobjekte in der Umgebung des Kraftfahrzeugs zuverlässig detektiert werden können. Wird das elektrische Empfangssignal nicht mit der benötigten Verstärkung verstärkt, so kann es nämlich vorkommen, dass ein empfangenes Zielecho eines realen Zielobjekts unterhalb der sogenannten Schwellwertkurve liegt und somit durch die Ultraschallsensoreinrichtung nicht detektiert werden kann. Durch explizite Überprüfung des Verstärkers können solche Situationen vermieden werden.

Bevorzugt kann die Diagnoseeinheit den Verstärker auf die Höhe seines Verstärkungsfaktors hin überprüfen. Somit kann festgestellt werden, ob das elektrische Empfangssignal mit der benötigten Verstärkungshöhe verstärkt und die Zielechos somit zuverlässig detektiert werden können.

Vorzugsweise umfasst die Ultraschallsensoreinrichtung ein Steuergerät sowie einen von diesem Steuergerät separaten Ultraschallsensor mit einem Sensorgehäuse, in welchem der Sender, der Empfänger und die Diagnoseeinheit angeordnet sind. Ein Ergebnis der Diagnose kann dann von der Diagnoseeinheit an das Steuergerät übermittelt werden. Diese Ausführungsform basiert auf der Erkenntnis, dass im Stand der Technik von den Ultraschallsensoren an das Steuergerät ein Nachrichtenimpuls übermittelt wird, dessen Länge direkt von der Ausschwingzeit der Membran abhängig ist, und dass anhand dieser Länge des Nachrichtenimpulses lediglich eine binäre Entscheidung darüber getroffen werden kann, ob die Ultraschallsensoren arbeiten oder nicht. Erst durch die Integration der Diagnoseeinheit in den Ultraschallsensor und die sensorinterne Diagnose des Empfängers können weitere Aussagen darüber getroffen werden, ob und wie gut der Empfänger tatsächlich funktioniert. Das Ergebnis dieser Diagnose kann dann von dem Ultraschallsensor an das Steuergerät übermittelt werden. Die Diagnose kann beispielsweise aufgrund eines Steuersignals des Steuergeräts eingeleitet werden. Mit diesem Steuersignal kann der Ultraschallsensor beispielsweise in einem speziellen, und insbesondere von dem normalen Betrieb separaten, Diagnosemodus umgeschaltet werden, in welchem die Diagnose des Empfängers durchgeführt wird. Der Diagnosemodus kann beispielsweise bei jeder Initialisierung der Ultraschallsensoreinrichtung bzw. bei jedem Bootvorgang des Steuergeräts aktiviert werden, wenn insbesondere die Zündung des Kraftfahrzeugs aktiviert wird.

Erfindungsgemäß ist vorgesehen, dass die Diagnoseeinheit den Sender zum Ausgeben zumindest eines elektrischen Sendeimpulses ansteuert und ein durch den Empfänger in Reaktion auf den zumindest einen Sendeimpuls ausgegebenes Antwortsignal auswertet. Somit wird die Antwort bzw. die Reaktion des Empfängers auf zumindest einen elektrischen Impuls überwacht bzw. ausgewertet, wodurch Rückschlüsse auf die Funktionsfähigkeit des Empfängers, insbesondere auf die Verstärkungshöhe, möglich sind.

Erfindungsgemäß ist vorgesehen, dass im Rahmen der Diagnose die Diagnoseeinheit den Sender zum Ausgeben von zumindest zwei Sendeimpulsen nacheinander ansteuert. Die Diagnose des Empfängers kann somit zuverlässig erfolgen, da auch das Antwortsignal bezüglich mehrerer Impulse ausgewertet werden kann.

Die zumindest zwei Sendeimpulse weisen vorzugsweise unterschiedliche Pulslängen auf, und die Diagnoseeinheit ist bevorzugt dazu ausgelegt, elektrische Impulse des in Reaktion auf die zumindest zwei Sendeimpulse ausgegebenen Antwortsignals des Empfängers auf ihre Pulslängen hin zu überprüfen. Somit kann überprüft werden, ob die Variation der Pulslängen der Sendeimpulse auch eine Änderung der Pulslänge der Impulse des Antwortsignals zur Folge hat und die Reaktion des Empfängers auf die zumindest zwei Sendeimpulse korrekt ist. Auf diese Weise können Fehler des Empfängers detektiert werden.

Erfindungsgemäß ist vorgesehen, dass beim Ansteuern des Senders zum Ausgeben des zumindest einen Sendeimpulses die Diagnoseeinheit vorzugsweise einen Verstärkungsfaktor des Verstärkers des Empfängers variiert und das in Reaktion auf den zumindest einen Sendeimpuls ausgegebene Antwortsignal des Empfängers auf seine Höhe hin überprüft. Der Verstärkungsfaktor des Verstärkers wird dabei mit jedem Sendeimpuls verändert. Werden mehrere Sendeimpulse ausgegeben, kann der Verstärkungsfaktor für jeden Sendeimpuls auf einen anderen Wert eingestellt werden. Auf diese Weise kann die Verstärkungshöhe des Verstärkers ohne viel Aufwand überprüft werden.

In diesem Zusammenhang kann die Diagnoseeinheit für zumindest einen Sendeimpuls des Senders den Verstärkungsfaktor auf ein Minimum, d.h. auf den minimal möglichen Verstärkungswert, und/oder für zumindest einen Sendeimpuls auf ein Maximum, d.h. auf einen maximal möglichen Verstärkungswert, einstellen. Somit kann anhand des Antwortsignals des Empfängers überprüft werden, ob der Verstärker bei seinem minimalen Verstärkungsfaktor und/oder seinem maximalen Verstärkungsfaktor betrieben und das elektrische Empfangssignal somit zuverlässig verstärkt werden kann.

Werden mehrere Sendeimpulse ausgegeben, so kann der Verstärkungsfaktor beispielsweise stufenweise von dem Minimum auf das Maximum variiert werden, wobei insbesondere der Verstärkungsfaktor mit jedem Sendeimpuls jeweils um eine Stufe verändert wird.

Die Diagnose kann derart erfolgen, dass der Sender zum Abgeben des zumindest einen Sendeimpulses an das Anregungselement angesteuert wird, während der Empfänger ebenfalls mit dem Anregungselement elektrisch gekoppelt ist. Am Eingang des Empfängers liegt somit ein elektrisches Signal an, welches durch das Anregungselement bereitgestellt wird. Aus diesem elektrischen Signal erzeugt der Empfänger dann das oben genannte Antwortsignal, anhand dessen die Diagnose vorgenommen wird. Hierdurch lassen sich auch Fehler in dem Pfad zwischen Sender und Empfänger detektieren, wie insbesondere Fehler des Anregungselements und/oder eine abgerissene Membran.

Die Ultraschallsensoreinrichtung kann einen Schalter umfassen, welcher zwischen einer ersten Schaltstellung, in welcher der Ausgang des Senders und der Eingang des Empfängers mit dem Anregungselement elektrisch gekoppelt sind, und einer zweiten Schaltstellung hin und her schaltbar ist, in welcher der Eingang des Empfängers unter Umgehung des Anregungselements direkt mit dem Ausgang des Senders elektrisch verbunden ist. Die Diagnoseeinheit kann dann in der zweiten Schaltstellung des Schalters - wenn der Empfänger direkt mit dem Sender gekoppelt ist - den Sender zum Abgeben des zumindest einen Sendeimpulses an den Empfänger ansteuern. Durch einen solchen Schalter kann zuverlässig zwischen Fehlern des Empfängers selbst einerseits und Fehlern des Pfads zwischen Sender und Empfänger (Anregungselement und/oder Membran) unterschieden werden.

Dies kann beispielsweise so aussehen, dass beim Durchführen der Diagnose zunächst der Sender zum Abgeben zumindest eines Sendeimpulses an das Anregungselement in der einen Schaltstellung - zum Beispiel der ersten Schaltstellung - des Schalters angesteuert wird, in welcher beispielsweise sowohl der Sender als auch der Empfänger mit dem Anregungselement verbunden sind. Erst, wenn durch diese Diagnose ein Fehler anhand des Antwortsignals detektiert wird, kann der Sender dann auch in der anderen Schaltstellung des Schalters zum Abgeben zumindest eines genannten Sendeimpulses angesteuert werden, beispielsweise direkt an den Empfänger. Im Normalfall, wenn in der ersten (oder zweiten) Schaltstellung des Schalters keine Fehler detektiert werden, kann die Diagnose somit schnell abgeschlossen und der normale Betrieb gestartet werden. Wird in der ersten (oder zweiten) Schaltstellung des Schalters jedoch ein Fehler detektiert, so kann durch die zusätzliche Diagnose in der zweiten (oder ersten) Schaltstellung des Schalters eindeutig unterschieden werden, ob der detektierte Fehler ein Defekt des Empfängers selbst oder aber ein Defekt des Pfades zwischen Sender und Empfänger ist, insbesondere des Anregungselements und/oder der Membran.

In einer Ausführungsform ist somit vorgesehen, dass die Diagnoseeinheit anhand der jeweiligen Antwortsignale des Empfängers in der ersten und der zweiten Schaltstellung des Schalters bestimmt, ob der detektierte Fehler ein Defekt des Empfängers oder aber ein Defekt außerhalb des Empfängers ist, insbesondere des Anregungselements und/oder der Membran. Der detektierte Fehler lässt sich somit zuverlässig lokalisieren. Wird der Fehler nämlich in beiden Schaltstellungen des Schalters detektiert, so handelt es sich bei diesem Fehler um einen Fehler des Empfängers selbst. Wird in der nächsten Schaltstellung jedoch kein Fehler mehr festgestellt, so war der Fehler mit großer Wahrscheinlichkeit auf das Anregungselement und/oder die Membran zurückzuführen. In diesem Fall kann dann lediglich die Membran und/oder das Anregungselement ausgetauscht werden, wenn dies bei der jeweiligen Bauweise des Ultraschallsensors möglich ist.

Die oben genannten Ausführungsformen bezüglich der Durchführung der Diagnose, insbesondere hinsichtlich der Anzahl der Sendeimpulse und/oder der Variation des Verstärkungsfaktors und/oder der Pulslängen, können sowohl für die erste als auch die zweite Schaltstellung des Schalters gelten.

Ein erfindungsgemäßes Kraftfahrzeug, insbesondere ein Personenkraftwagen, umfasst eine erfindungsgemäße Ultraschallsensoreinrichtung.

Bei einem erfindungsgemäßen Verfahren zum Betreiben einer Ultraschallsensoreinrichtung eines Kraftfahrzeugs werden Ultraschallwellen mittels einer Membran ausgesendet und empfangen. Mittels eines Anregungselements wird beim Empfangen der Ultraschallwellen ein elektrisches Empfangssignal bereitgestellt. Mittels des Anregungselements wird die Membran auch zum Aussenden der Ultraschallwellen angeregt. Mittels eines Senders werden elektrische Sendeimpulse an das Anregungselement abgegeben. Mittels eines Empfängers wird das elektrische Empfangssignal empfangen und aufbereitet. Mittels einer Diagnoseeinheit wird eine Diagnose des Empfängers durchgeführt.

Die mit Bezug auf die erfindungsgemäße Ultraschallsensoreinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensoreinrichtung gemäß einer Ausführungsform der Erfindung;
- Fig. 2: ein Diagramm zur Erläuterung der Kommunikation zwischen einem Ultraschallsensor und einem Steuergerät;
- Fig. 3 und 4: in schematischer Darstellung jeweils einen Ultraschallsensor bei unterschiedlichen Stellungen eines Schalters; und
- Fig. 5 und 6: Diagramme zur Erläuterung einer Diagnose nach einem Verfahren gemäß einer Ausführungsform der Erfindung.

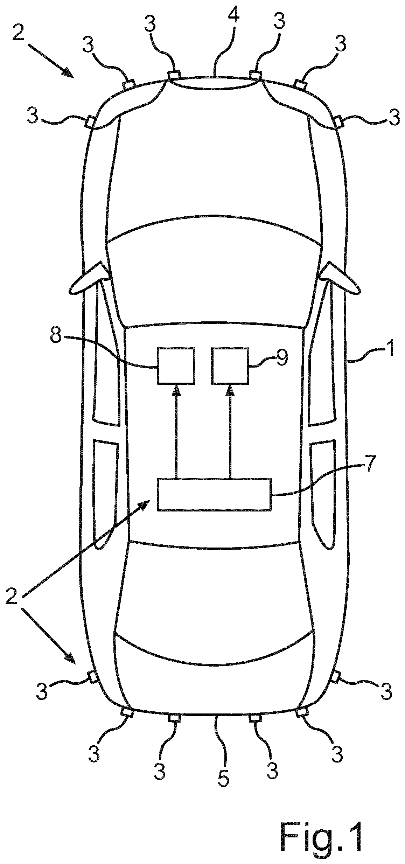

Ein in Fig. 1 dargestelltes Kraftfahrzeug 1 ist beispielsweise ein Personenkraftwagen. Das Kraftfahrzeug 1 beinhaltet eine Ultraschallsensoreinrichtung 2, welche beispielsweise eine Parkhilfe oder ein Parkassistenzsystem ist. Die Ultraschallsensoreinrichtung 2 dient zum Unterstützen des Fahrers des Kraftfahrzeugs 1 beim Durchführen von Parkvorgängen. Sie umfasst zu diesem Zwecke eine Vielzahl von Ultraschallsensoren 3, welche sowohl am vorderen Stoßfänger 4 als auch am hinteren Stoßfänger 5 verteilt angeordnet sind. Alle Ultraschallsensoren 3 sind mit einem Steuergerät 7 der Ultraschallsensoreinrichtung 2 elektrisch gekoppelt. Das Steuergerät 7 kann beispielsweise einen digitalen Signalprozessor und/oder einen Mikrocontroller beinhalten und dient zur Ansteuerung der Ultraschallsensoren 3. Das Steuergerät 7 empfängt auch Messdaten von den Ultraschallsensoren 3 und bestimmt in Abhängigkeit von diesen Messdaten die Abstände zwischen dem Kraftfahrzeug 1 und in seiner Umgebung befindlichen Hindernissen. In Abhängigkeit von diesen Abständen kann das Steuergerät 7 beispielsweise einen Lautsprecher 8 und/oder eine optische Anzeigeeinrichtung 9 - beispielsweise ein Display - ansteuern. Mithilfe des Lautsprechers 8 und/oder der Anzeigeeinrichtung 9 wird der Fahrer über die gemessenen Abstände informiert.

Gegebenenfalls kann die Ultraschallsensoreinrichtung 2 auch ein automatisches oder semi-automatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Ultraschallsensoreinrichtung 2 sowohl die Längsführung als auch die Querführung des Kraftfahrzeugs 1, während bei semi-automatischen bzw. halbautomatischen Systemen die Ultraschallsensoreinrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Ultraschallsensoreinrichtung 2 ausgegeben werden.

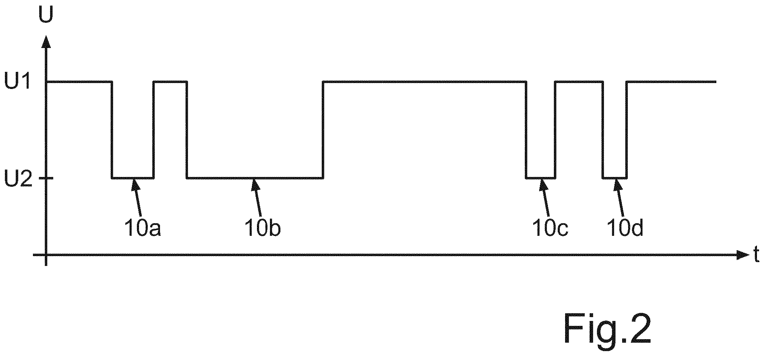

Jeder Ultraschallsensor 3 ist mit dem Steuergerät 7 vorzugsweise über eine separate Leitung verbunden. Die Kommunikation zwischen dem jeweiligen Ultraschallsensor 3 und dem Steuergerät 7 erfolgt über die zugeordnete Leitung mittels elektrischer Spannung. Ein Beispiel einer solchen Kommunikation zwischen einem einzelnen Ultraschallsensor 3 und dem Steuergerät 7 ist in Fig. 2 dargestellt. Auf der y-Achse ist die elektrische Spannung U aufgetragen, welche an der Leitung zwischen Ultraschallsensor 3 und Steuergerät 7 anliegt. Auf der x-Achse ist die Zeit t aufgetragen. Zur Übertragung von Nachrichten wird die Spannung U von einem ersten Spannungswert U1 auf einen zweiten Spannungswert U2 geändert, hier reduziert. Die Leitung ist somit mit dem ersten Spannungswert U1 vorgespannt, wobei zur Übermittlung von Nachrichten die Spannung U auf den zweiten Spannungswert U2 reduziert wird, indem beispielsweise die Leitung auf Masse (0 Volt) gelegt wird. Dadurch werden Spannungsimpulse 10a, 10b, 10c, 10d erzeugt, welche entsprechende Nachrichten enthalten. Der erste Spannungsimpuls 10a wird durch das Steuergerät 7 erzeugt, um den Ultraschallsensor 3 zum Aussenden eines Sendesignals zur Durchführung einer Messung anzusteuern. In Reaktion auf den ersten Spannungsimpuls 10a sendet der Ultraschallsensor 3 ein Sendesignal (Ultraschall) aus, was durch den Ultraschallsensor 3 mit dem zweiten Spannungsimpuls 10b dem Steuergerät 7 signalisiert bzw. mitgeteilt wird. Die Länge des Spannungsimpulses 10b entspricht dabei der Zeitdauer der Membranschwingung einschließlich der Ausschwingzeit. Werden durch den Ultraschallsensor 3 dann Zielechos detektiert, so werden die weiteren Spannungsimpulse 10c, 10d erzeugt, um diese Detektion dem Steuergerät 7 mitzuteilen.

Im Stand der Technik erfolgt die Diagnose der Ultraschallsensoren 3 anhand der Pulslänge des jeweiligen zweiten Spannungsimpulses 10b, dessen Länge von der Ausschwingzeit abhängt. Dieser Spannungsimpuls 10b ermöglicht jedoch keine weiteren Rückschlüsse auf interne Fehler der Ultraschallsensoren 3, insbesondere auf die Funktionsweise von jeweiligen Empfängern der Ultraschallsensoren 3, wie zum Beispiel auf die jeweilige Verstärkung eines Verstärkers. Werden die Empfangssignale innerhalb eines Ultraschallsensors 3 nicht mit der benötigten Verstärkung verstärkt, kann dies anhand des Spannungsimpulses 10b nicht detektiert werden. In diesem Falle können Zielobjekte nicht zuverlässig detektiert werden.

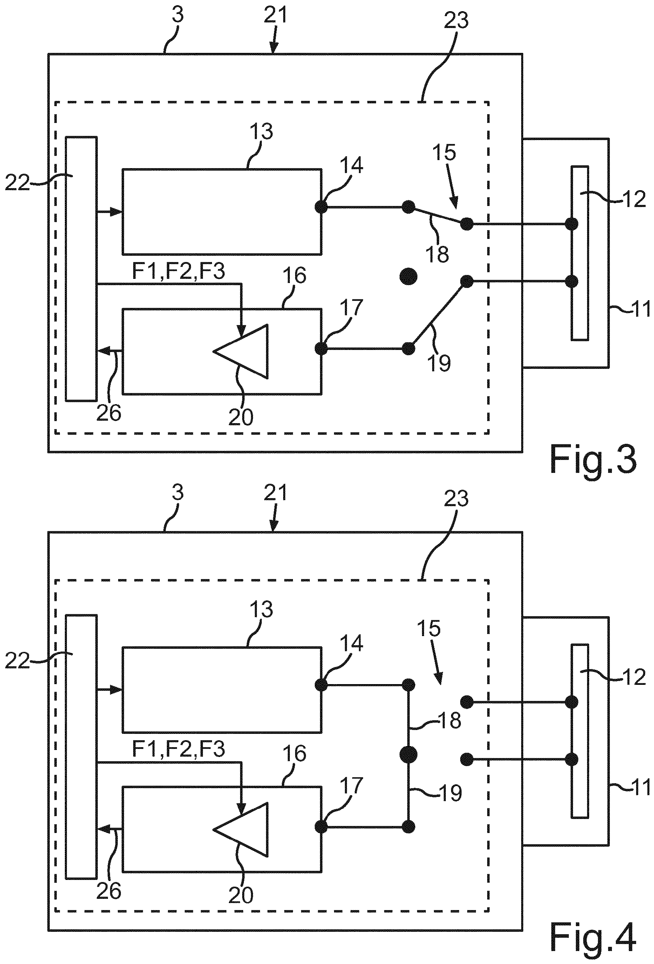

Ein einzelner Ultraschallsensor 3 gemäß einer Ausführungsform der Erfindung ist in Fig. 3 dargestellt. Der Ultraschallsensor 3 weist eine Membran 11 auf, welche mittels eines Anregungselements 12 in Form eines piezoelektrischen Elements zum Aussenden von Ultraschallwellen angeregt werden kann. Der Ultraschallsensor 3 umfasst einen Sender 13, dessen Ausgang 14 über einen Schalter 15 mit dem Anregungselement 12 elektrisch gekoppelt ist. Der Ultraschallsensor 3 umfasst des Weiteren einen Empfänger 16, dessen Eingang 17 über den Schalter 15 ebenfalls mit dem Anregungselement 12 elektrisch gekoppelt ist. Der Schalter 15 umfasst zwei Schaltelemente 18, 19, über welche der Sender 13 respektive der Empfänger 16 mit dem Anregungselement 12 koppelbar sind. Der Schalter 15 ist von einer ersten Schaltstellung, in welcher der Sender 13 und der Empfänger 16 parallel mit dem Anregungselement 12 elektrisch verbunden sind, in eine zweite Schaltstellung gemäß Fig. 4 schaltbar, in welcher die beiden Schaltelemente 18, 19 miteinander verbunden sind und der Ausgang des Senders 13 somit unter Umgehung des Anregungselements 12 direkt mit dem Eingang 17 des Empfängers 16 verbunden ist. Der Schalter 15 kann dabei beispielsweise mit Transistoren realisiert werden.

Zur Durchführung einer Diagnose des Empfängers 16, und insbesondere eines Verstärkers 20 des Empfängers 16, ist in den Ultraschallsensor 3 - nämlich in ein Gehäuse 21 des Ultraschallsensors 3 - eine Diagnoseeinheit 22 integriert, welche zusammen mit dem Sender 13 und dem Empfänger 16 auch in Form eines gemeinsamen elektronischen Schaltkreises 23, etwa eines ASIC, realisiert werden kann. Die Diagnoseeinheit 22 kommuniziert dabei mit dem Steuergerät 7 und führt die Diagnose des Empfängers 16 aufgrund eines Steuerbefehls des Steuergeräts 7 durch. Dies bedeutet, dass die Diagnose durch das Steuergerät 7 mit einem entsprechenden Steuersignal an die Diagnoseeinheit 22 getriggert wird. Das Ergebnis der Diagnose wird dann von der Diagnoseeinheit 22 an das Steuergerät 7 übermittelt.

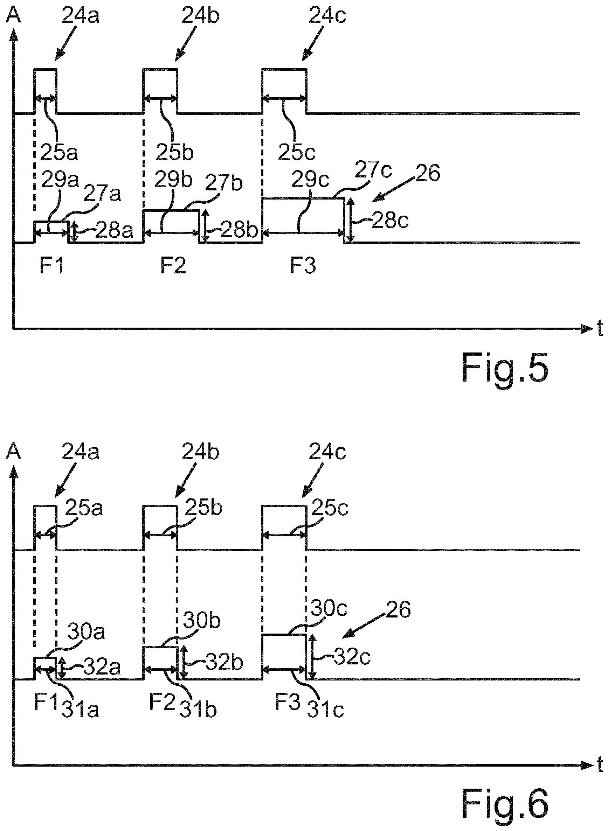

Bei der Diagnose wird der Schalter 15 zunächst in der ersten Schaltstellung gemäß Fig. 3 gehalten, so dass der Sender 13 und der Empfänger 16 mit dem Anregungselement 12 elektrisch gekoppelt sind. Der Sender 13 wird dann zur Abgabe einer Sequenz von Sendeimpulsen 24a, 24b, 24c angesteuert, wie sie schematisch in Fig. 5 dargestellt sind. Auf der y-Achse ist dabei die Amplitude A aufgetragen, auf der x-Achse die Zeit t. Die Sendeimpulse 24a, 24b, 24c werden also nacheinander abgegeben, wobei mit jedem Sendeimpuls 24a, 24b, 24c eine Pulslänge 25a, 25b, 25c im Vergleich zu dem jeweils vorherigen Sendeimpuls 24a, 24b, 24c vergrößert wird. Die Sendeimpulse 24a, 24b, 24c weisen also unterschiedliche Pulslängen 25a, 25b, 25c auf. Die Diagnoseeinheit 22 wertet dann ein Antwortsignal 26 aus, welches durch den Empfänger 16 in Reaktion auf die Sendeimpulse 24a, 24b, 24c ausgegeben wird. Mit jedem Sendeimpuls 24a, 24b, 24c erhöht die Diagnoseeinheit 24 einen Verstärkungsfaktor des Verstärkers 20: Der Sendeimpuls 24a wird bei einem Verstärkungsfaktor der Höhe F1 erzeugt, der Sendeimpuls 24b bei einem Verstärkungsfaktor F2, der Sendeimpuls 24c bei einem Verstärkungsfaktor F3. Es gilt dabei: F1 < F2 < F3. Insbesondere ist dabei auch vorgesehen, dass der Verstärkungsfaktor F1 einem minimalen Verstärkungsfaktor des Verstärkers 20 und somit einem Minimum entspricht, welches bei dem Verstärker 20 überhaupt eingestellt werden kann. Entsprechend kann der Verstärkungsfaktor F3 einem Maximum bzw. einem maximal möglichen Verstärkungsfaktor entsprechen. Während Abgabe der Sendeimpulse 24a, 24b, 24c wird der Verstärkungsfaktor des Verstärkers 20 somit von dem Minimum stufenweise auf das Maximum erhöht.

Wie aus Fig. 5 hervorgeht, beinhaltet das Antwortsignal 26 ebenfalls drei Spannungsimpulse 27a, 27b, 27c. Diese Spannungsimpulse 27a, 27b, 27c weisen aufgrund der unterschiedlichen Verstärkungsfaktoren F1, F2, F3 unterschiedliche Pulshöhen 28a, 28b, 28c auf. Die Spannungsimpulse 27a, 27b, 27c weisen außerdem aufgrund der unterschiedlichen Pulslängen 25a, 25b, 25c der Sendeimpulse 24a, 24b, 24c ebenfalls unterschiedliche Pulslängen 29a, 29b, 29c auf. Aufgrund der zusätzlichen Ausschwingzeit der Membran 11 sind die Pulslängen 29a, 29b, 29c ein wenig größer als die jeweiligen Pulslängen 25a, 25b, 25c der entsprechenden Sendeimpulse 24a, 24b, 24c.

Die Diagnoseeinheit 22 vergleicht nun die Pulslängen 29a, 29b, 29c und/oder die Pulshöhen 28a, 28b, 28c des Antwortsignals 26 mit abgelegten Referenzwerten und kann so den Empfänger 16, und insbesondere den Verstärker 20, diagnostizieren.

Wird bei der in der ersten Stellung des Schalters 15 durchgeführten Diagnose kein Fehler festgestellt, so wird die Diagnose beendet und das positive Ergebnis der Diagnose dem Steuergerät 7 mitgeteilt. Werden jedoch Unregelmäßigkeiten in dem Antwortsignal 26 festgestellt, wird ein zusätzlicher Diagnoseschritt durchgeführt, bei welchem der Schalter 15 in die zweite Schaltstellung gemäß Fig. 4 geschaltet wird. Dann werden entsprechende Sendeimpulse 24a, 24b, 24c direkt an den Eingang 17 des Empfängers 16 abgegeben. Ein entsprechendes Antwortsignal 26 des Empfängers 16 ist in Fig. 6 dargestellt. Auch hier werden mehrere - beispielsweise drei - Sendeimpulse 24a, 24b, 24c mit unterschiedlichen Pulslängen 25a, 25b, 25c erzeugt, jedoch unter Umgehung des Anregungselements 12. Entsprechend wird mit jedem Sendeimpuls 24a, 24b, 24c auch der Verstärkungsfaktor des Verstärkers 20 erhöht, beispielsweise ebenfalls von dem Minimum F1 auf das Maximum F3. Wie aus Fig. 6 hervorgeht, beinhaltet das Antwortsignal 26 im fehlerfreien Fall entsprechende Spannungsimpulse 30a, 30b, 30c, welche jeweilige Pulslängen 31a, 31b, 31c aufweisen, die den jeweiligen Pulslängen 25a, 25b, 25c der zugeordneten Sendeimpulse 24a, 24b, 24c entsprechen. Aufgrund der unterschiedlichen Verstärkungsfaktoren F1, F2, F3 weisen die Spannungsimpulse 30a, 30b, 30c unterschiedliche Pulshöhen 32a, 32b, 32c auf. Die Pulslängen 21a, 21b, 21c und/oder die Pulshöhen 32a, 32b, 32c werden durch die Diagnoseeinheit 22 ausgewertet und hierbei mit abgelegten Referenzwerten verglichen.

Wird nun bei der Diagnose in der zweiten Schaltstellung des Schalters 15 ein Fehler detektiert, so handelt es sich bei diesem Fehler um einen Defekt des Empfängers 16, insbesondere des Verstärkers 20. Wird jedoch kein Fehler festgestellt, so wird dies als ein Defekt der Membran 11 und/oder des Anregungselements 12 interpretiert. Das Ergebnis der Diagnose wird an das Steuergerät 7 übermittelt.

Die Diagnose kann beispielsweise während jeder Initialisierung der Ultraschallsensoreinrichtung 2 vorgenommen werden, d.h. bei jedem Bootvorgang des Steuergeräts 7. Die Diagnose erfolgt somit grundsätzlich bei jeder Inbetriebnahme des Kraftfahrzeugs 1. Es ist aber auch möglich, zusätzlich eine Überprüfung auch während einer Messung durchzuführen.

Vorstehend wurde ein Diagnoseverfahren erläutert, bei welchem zunächst ein erster Diagnoseschritt in der ersten Schaltstellung des Schalters 15 und anschließend gegebenenfalls ein zweiter Diagnoseschritt in der zweiten Schaltstellung durchgeführt wird. Es ist jedoch auch möglich, zunächst eine Diagnose des Empfängers 16 in der zweiten Schaltstellung und dann gegebenenfalls einen weiteren Diagnoseschritt in der ersten Schaltstellung durchzuführen.

## Patentansprüche

1. Ultraschallsensoreinrichtung (2) für ein Kraftfahrzeug (1), mit einer Membran (11) zum Aussenden und Empfangen von Ultraschallwellen, mit einem Anregungselement (12), welches zum Bereitstellen eines elektrischen Empfangssignals beim Empfangen der Ultraschallwellen sowie zum Anregen der Membran (11) zum Aussenden der Ultraschallwellen ausgebildet ist, mit einem Sender (13) zum Abgeben von elektrischen Impulsen an das Anregungselement (12), und mit einem Empfänger (16) zum Empfangen und Aufbereiten des elektrischen Empfangssignals, wobei die Ultraschallsensoreinrichtung (2) eine Diagnoseeinheit (22) aufweist, welche dazu ausgelegt ist, eine Diagnose des Empfängers (16) durchzuführen und hierbei den Empfänger (16) auf seine Funktionsfähigkeit hin zu überprüfen, wobei die Diagnoseeinheit (22) dazu ausgelegt ist, im Rahmen der Diagnose den Sender (13) zum Ausgeben von zumindest zwei Sendeimpulsen (24) nacheinander anzusteuern und ein durch den Empfänger (16) in Reaktion auf die Sendeimpulse (24) ausgegebenes Antwortsignal (26) auszuwerten, **dadurch gekennzeichnet, dass** die Diagnoseeinheit (22) dazu ausgelegt ist, beim Ansteuern des Senders (13) zum Ausgeben der Sendeimpulse (24) einen Verstärkungsfaktor (F1, F2, F3) eines Verstärkers (20) des Empfängers (16) mit jedem Sendeimpuls (24) zu verändern und das in Reaktion auf den jeweiligen Sendeimpuls (24) ausgegebene Antwortsignal (26) des Empfängers (16) auf seine Höhe (28, 32) hin zu überprüfen.

2. Ultraschallsensoreinrichtung (2) nach Anspruch 1,
**dadurch gekennzeichnet, dass**
der Empfänger (16) einen Verstärker (20) zum Verstärken des elektrischen Empfangssignals umfasst und die Diagnoseeinheit (22) dazu ausgelegt ist, im Rahmen der Diagnose den Verstärker (20) auf seine Funktionsfähigkeit hin zu überprüfen.

3. Ultraschallsensoreinrichtung (2) nach Anspruch 2,
**dadurch gekennzeichnet, dass**
die Diagnoseeinheit (22) dazu ausgelegt ist, im Rahmen der Diagnose den Verstärker (20) auf die Höhe eines Verstärkungsfaktors (F1, F2, F3) hin zu überprüfen.

4. Ultraschallsensoreinrichtung (2) nach einem der vorhergehenden Ansprüche,
**dadurch gekennzeichnet, dass**
die Ultraschallsensoreinrichtung (2) ein Steuergerät (7) sowie einen von dem Steuergerät (7) separaten Ultraschallsensor (3) mit einem Sensorgehäuse (21) aufweist, in welchem der Sender (13), der Empfänger (16) und die Diagnoseeinheit (22) angeordnet sind, wobei die Diagnoseeinheit (22) dazu ausgelegt ist, ein Ergebnis der Diagnose des Empfängers (16) an das Steuergerät (7) zu übermitteln.

5. Ultraschallsensoreinrichtung (2) nach einem der Ansprüche 1 bis 4,
**dadurch gekennzeichnet, dass**
die zumindest zwei Sendeimpulse (24) unterschiedliche Pulslängen (25) aufweisen, wobei die Diagnoseeinheit (22) dazu ausgelegt ist, Impulse (27, 30) des in Reaktion auf die zumindest zwei Sendeimpulse (24) ausgegebenen Antwortsignals (26) des Empfängers (16) auf ihre Pulslängen (29, 31) hin zu überprüfen.

6. Ultraschallsensoreinrichtung (2) nach einem der vorhergehenden Ansprüche,
**dadurch gekennzeichnet, dass**
die Diagnoseeinheit (22) dazu ausgelegt ist, für zumindest einen Sendeimpuls (24) des Senders (13) den Verstärkungsfaktor (F1, F2, F3) auf ein Minimum und/oder für zumindest einen Sendeimpuls (24) des Senders (13) den Verstärkungsfaktor (F1, F2, F3) auf ein Maximum einzustellen.

7. Ultraschallsensoreinrichtung (2) nach einem der vorhergehenden Ansprüche,
**dadurch gekennzeichnet, dass**
die Diagnoseeinheit (22) dazu ausgelegt ist, den Sender (13) zum Abgeben des zumindest einen Sendeimpulses (24) an das Anregungselement (12) anzusteuern, während der Empfänger (16) mit dem Anregungselement (12) elektrisch gekoppelt ist.

8. Ultraschallsensoreinrichtung (2) nach einem der vorhergehenden Ansprüche,
**dadurch gekennzeichnet, dass**
die Ultraschallsensoreinrichtung (2) einen Schalter (15) umfasst, welcher zwischen einer ersten Schaltstellung, in welcher der Sender (13) und der Empfänger (16) mit dem Anregungselement (12) elektrisch gekoppelt sind, und einer zweiten Schaltstellung schaltbar ist, in welcher der Empfänger (16) unter Umgehung des Anregungselements (12) mit dem Sender (13) elektrisch gekoppelt ist, wobei die Diagnoseeinheit (22) dazu ausgelegt ist, in der zweiten Schaltstellung des Schalters (15) den Sender (13) zum Abgeben des zumindest einen Sendeimpulses (24) an den Empfänger (16) anzusteuern.

9. Ultraschallsensoreinrichtung (2) nach Anspruch 8,
**dadurch gekennzeichnet, dass**
die Diagnoseeinheit (22) dazu ausgelegt ist, beim Durchführen der Diagnose zunächst den Sender (13) zum Abgeben zumindest eines Sendeimpulses (24) in der einen Schaltstellung, insbesondere in der ersten Schaltstellung, des Schalters (15) und nur nach Detektion eines Fehlers den Sender (13) zum Abgeben zumindest eines Sendeimpulses (24) auch in der anderen Schaltstellung, insbesondere der zweiten Schaltstellung, des Schalters (15) anzusteuern.

10. Ultraschallsensoreinrichtung (2) nach Anspruch 9, **dadurch gekennzeichnet, dass**
die Diagnoseeinheit (22) dazu ausgelegt ist, anhand der jeweiligen Antwortsignale (26) des Empfängers (16) in der ersten und der zweiten Schaltstellung des Schalters (15) zu bestimmen, ob der detektierte Fehler ein Defekt des Empfängers (16) oder ein Defekt außerhalb des Empfängers (16), insbesondere des Anregungselements (12) und/oder der Membran (11), ist.

11. Kraftfahrzeug (1) mit einer Ultraschallsensoreinrichtung (2) nach einem der vorhergehenden Ansprüche.

12. Verfahren zum Betreiben einer Ultraschallsensoreinrichtung (2) eines Kraftfahrzeugs (1), bei welchem mittels einer Membran (11) Ultraschallwellen ausgesendet und empfangen werden, mittels eines Anregungselements (12) ein elektrisches Empfangssignal beim Empfangen der Ultraschallwellen bereitgestellt wird sowie die Membran (11) zum Aussenden der Ultraschallwellen angeregt wird, mittels eines Senders (13) elektrische Impulse an das Anregungselement (12) abgegeben werden und mittels eines Empfängers (16) das elektrische Empfangssignal empfangen und aufbereitet wird, wobei mittels einer Diagnoseeinheit (22) der Ultraschallsensoreinrichtung (2) eine Diagnose des Empfängers (16) durchgeführt und hierbei der Empfänger (16) auf seine Funktionsfähigkeit hin überprüft wird, wobei die Diagnoseeinheit (22) dazu ausgelegt ist, im Rahmen der Diagnose den Sender (13) zum Ausgeben von zumindest zwei Sendeimpulsen (24) nacheinander anzusteuern und ein durch den Empfänger (16) in Reaktion auf die Sendeimpulse (24) ausgegebenes Antwortsignal (26) auszuwerten, **dadurch gekennzeichnet, dass** die Diagnoseeinheit (22) dazu ausgelegt ist, beim Ansteuern des Senders (13) zum Ausgeben der Sendeimpulse (24) einen Verstärkungsfaktor (F1, F2, F3) eines Verstärkers (20) des Empfängers (16) mit jedem Sendeimpuls (24) zu verändern und das in Reaktion auf den jeweiligen Sendeimpuls (24) ausgegebene Antwortsignal (26) des Empfängers (16) auf seine Höhe (28, 32) hin zu überprüfen.

## Claims

1. Ultrasonic sensor device (2) for a motor vehicle (1), having a membrane (11) for emitting and receiving ultrasonic waves, having an excitation element (12) which is designed to provide an electrical reception signal upon receiving the ultrasonic waves and to excite the membrane (11) to emit ultrasonic waves, having a transmitter (13) for emitting electrical pulses to the excitation element (12), and having a receiver (16) for receiving and conditioning the electrical reception signal, wherein the ultrasonic sensor device (2) has a diagnostic unit (22) which is designed to diagnose the receiver (16) and in the process to check the functionality of the receiver (16), wherein the diagnostic unit (22) is designed to control the transmitter (13) to output at least two transmission pulses (24) in succession as part of the diagnosis and to evaluate a response signal (26) output by the receiver (16) in response to the transmission pulses (24), **characterized in that** the diagnostic unit (22) is designed, when controlling the transmitter (13) to output the transmission pulses (24), to change a gain factor (F1, F2, F3) of an amplifier (20) of the receiver (16) with each transmission pulse (24) and to check the level (28, 32) of the response signal (26) which is output by the receiver (16) in response to the respective transmission pulse (24).

2. Ultrasonic sensor device (2) according to Claim 1,
**characterized in that**
the receiver (16) comprises an amplifier (20) for amplifying the electrical reception signal, and the diagnostic unit (22) is designed to check the functionality of the amplifier (20) as part of the diagnosis.

3. Ultrasonic sensor device (2) according to Claim 2,
**characterized in that**
the diagnostic unit (22) is designed to check the level of a gain factor (F1, F2, F3) of the amplifier (20) as part of the diagnosis.

4. Ultrasonic sensor device (2) according to one of the preceding claims,
**characterized in that**
the ultrasonic sensor device (2) has a control device (7) and an ultrasonic sensor (3) which is separate from the control device (7) and has a sensor housing (21) in which the transmitter (13), the receiver (16) and the diagnostic unit (22) are arranged, wherein the diagnostic unit (22) is designed to transmit a result of the diagnosis of the receiver (16) to the control device (7).

5. Ultrasonic sensor device (2) according to one of Claims 1 to 4,
**characterized in that**
the at least two transmission pulses (24) have different pulse lengths (25), wherein the diagnostic unit (22) is designed to check the pulse lengths (29, 31) of pulses (27, 30) of the response signal (26) output by the receiver (16) in response to the at least two transmission pulses (24).

6. Ultrasonic sensor device (2) according to one of the preceding claims,
**characterized in that**
the diagnostic unit (22) is designed to set the gain factor (F1, F2, F3) to a minimum for at least one transmission pulse (24) from the transmitter (13) and/or to set the gain factor (F1, F2, F3) to a maximum for at least one transmission pulse (24) from the transmitter (13) .

7. Ultrasonic sensor device (2) according to one of the preceding claims,
**characterized in that**
the diagnostic unit (22) is designed to control the transmitter (13) to emit the at least one transmission pulse (24) to the excitation element (12) while the receiver (16) is electrically coupled to the excitation element (12).

8. Ultrasonic sensor device (2) according to one of the preceding claims,
**characterized in that**
the ultrasonic sensor device (2) comprises a switch (15) which can be switched between a first switching position, in which the transmitter (13) and the receiver (16) are electrically coupled to the excitation element (12), and a second switching position, in which the receiver (16) is electrically coupled to the transmitter (13) with the circumvention of the excitation element (12), wherein the diagnostic unit (22) is designed to control the transmitter (13) to emit the at least one transmission pulse (24) to the receiver (16) in the second switching position of the switch (15).

9. Ultrasonic sensor device (2) according to Claim 8,
**characterized in that**
the diagnostic unit (22) is designed, when carrying out the diagnosis, to first of all control the transmitter (13) to emit at least one transmission pulse (24) in one switching position, in particular in the first switching position, of the switch (15) and to control the transmitter (13) to also emit at least one transmission pulse (24) in the other switching position, in particular the second switching position, of the switch (15) only after a fault has been detected.

10. Ultrasonic sensor device (2) according to Claim 9,
**characterized in that**
the diagnostic unit (22) is designed to determine, on the basis of the respective response signals (26) from the receiver (16) in the first and second switching positions of the switch (15), whether the detected fault is a defect of the receiver (16) or a defect outside the receiver (16), in particular of the excitation element (12) and/or of the membrane (11).

11. Motor vehicle (1) having an ultrasonic sensor device (2) according to one of the preceding claims.

12. Method for operating an ultrasonic sensor device (2) of a motor vehicle (1), in which ultrasonic waves are emitted and received by means of a membrane (11), an electrical reception signal is provided by means of an excitation element (12) upon receiving the ultrasonic waves, and the membrane (11) is excited to emit the ultrasonic waves, electrical pulses are emitted to the excitation element (12) by means of a transmitter (13), and the electrical reception signal is received and conditioned by means of a receiver (16), wherein the receiver (16) is diagnosed by means of a diagnostic unit (22) of the ultrasonic sensor device (2) and the functionality of the receiver (16) is checked in the process, wherein the diagnostic unit (22) is designed to control the transmitter (13) to output at least two transmission pulses (24) in succession as part of the diagnosis and to evaluate a response signal (26) output by the receiver (16) in response to the transmission pulses (24), **characterized in that** the diagnostic unit (22) is designed, when controlling the transmitter (13) to output the transmission pulses (24), to change a gain factor (F1, F2, F3) of an amplifier (20) of the receiver (16) with each transmission pulse (24) and to check the level (28, 32) of the response signal (26) output by the receiver (16) in response to the respective transmission pulse (24).

## Revendications

1. Dispositif de détection à ultrasons (2) pour un véhicule automobile (1), comprenant une membrane (11) servant à émettre et à recevoir des ondes ultrasonores, un élément d'excitation (12) qui est réalisé pour fournir un signal de réception électrique lors de la réception des ondes ultrasonores et pour exciter la membrane (11) afin d'émettre les ondes ultrasonores, un émetteur (13) servant à délivrer des impulsions électriques à destination de l'élément d'excitation (12), et un récepteur (16) servant à recevoir et à mettre en forme le signal de réception électrique, le dispositif de détection à ultrasons (2) présentant une unité de diagnostic (22) qui est conçue pour effectuer un diagnostic du récepteur (16) et ainsi pour vérifier le récepteur (16) quant à son bon fonctionnement, dans lequel l'unité de diagnostic (22) est conçue dans le cadre du diagnostic pour piloter l'émetteur (13) afin de délivrer au moins deux impulsions d'émission (24) l'une après l'autre et pour évaluer un signal de réponse (26) délivré par le récepteur (16) en réaction aux impulsions d'émission (24), **caractérisé en ce que** l'unité de diagnostic (22) est conçue lors du pilotage de l'émetteur (13) afin de délivrer les impulsions d'émission (24) pour modifier un facteur d'amplification (F1, F2, F3) d'un amplificateur (20) du récepteur (16) à chaque impulsion d'émission (24) et pour vérifier le signal de réponse (26) du récepteur (16) délivré en réaction aux impulsions d'émission (24) respectives quant à son niveau (28, 32).

2. Dispositif de détection à ultrasons (2) selon la revendication 1, **caractérisé en ce que** le récepteur (16) comprend un amplificateur (20) servant à amplifier le signal de réception électrique, et l'unité de diagnostic (22) dans le cadre du diagnostic est conçue pour vérifier l'amplificateur (20) quant à son bon fonctionnement.

3. Dispositif de détection à ultrasons (2) selon la revendication 2, **caractérisé en ce que** l'unité de diagnostic (22) dans le cadre du diagnostic est conçue pour vérifier l'amplificateur (20) quant au niveau d'un facteur d'amplification (F1, F2, F3).

4. Dispositif de détection à ultrasons (2) selon l'une quelconque des revendications précédentes, **caractérisé en ce que** le dispositif de détection à ultrasons (2) présente un contrôleur (7) ainsi qu'un capteur à ultrasons (3) séparé du contrôleur (7) avec un boîtier de capteur (21) dans lequel l'émetteur (13), le récepteur (16) et l'unité de diagnostic (22) sont disposés, l'unité de diagnostic (22) étant conçue pour transmettre un résultat du diagnostic du récepteur (16) au contrôleur (7).

5. Dispositif de détection à ultrasons (2) selon l'une quelconque des revendications 1 à 4, **caractérisé en ce que** les au moins deux impulsions d'émission (24) présentent des longueurs d'impulsion (25) différentes, l'unité de diagnostic (22) étant conçue pour vérifier des impulsions (27, 30) du signal de réponse (26) du récepteur (16), délivré en réponse auxdites au moins deux impulsions d'émission (24), quant à leurs longueurs d'impulsion (29, 31).

6. Dispositif de détection à ultrasons (2) selon l'une quelconque des revendications précédentes, **caractérisé en ce que** l'unité de diagnostic (22) est conçue pour régler le facteur d'amplification (F1, F2, F3) sur un minimum pour au moins une impulsion d'émission (24) de l'émetteur (13) et/ou pour régler le facteur d'amplification (F1, F2, F3) sur un maximum pour au moins une impulsion d'émission (24) de l'émetteur (13).

7. Dispositif de détection à ultrasons (2) selon l'une quelconque des revendications précédentes, **caractérisé en ce que** l'unité de diagnostic (22) est conçue pour piloter l'émetteur (13) afin de délivrer ladite au moins une impulsion d'émission (24) à destination de l'élément d'excitation (12) pendant que le récepteur (16) est couplé électriquement à l'élément d'excitation (12).

8. Dispositif de détection à ultrasons (2) selon l'une quelconque des revendications précédentes, **caractérisé en ce que** le dispositif de détection à ultrasons (2) comprend un commutateur (15) qui peut être commuté entre une première position de commutation, dans laquelle l'émetteur (13) et le récepteur (16) sont couplés électriquement à l'élément d'excitation (12), et une deuxième position de commutation, dans laquelle le récepteur (16) est couplé électriquement à l'émetteur (13) en contournant l'élément d'excitation (12), l'unité de diagnostic (22) étant conçue dans la deuxième position de commutation du commutateur (15) pour piloter l'émetteur (13) afin de délivrer au moins une impulsion d'émission (24) à destination du récepteur (16).

9. Dispositif de détection à ultrasons (2) selon la revendication 8, **caractérisé en ce que** l'unité de diagnostic (22) est conçue lors de l'exécution du diagnostic pour piloter d'abord l'émetteur (13) afin de délivrer au moins une impulsion d'émission (24) dans ladite une position de commutation, en particulier dans la première position de commutation, du commutateur (15), et seulement après détection d'une erreur pour piloter l'émetteur (13) afin de délivrer au moins une impulsion d'émission (24) également dans l'autre position de commutation, en particulier la deuxième position de commutation, du commutateur (15).

10. Dispositif de détection à ultrasons (2) selon la revendication 9, **caractérisé en ce que** l'unité de diagnostic (22) est conçue pour déterminer à l'aide des signaux de réponse (26) respectifs du récepteur (16) dans la première et la deuxième position de commutation du commutateur (15) si l'erreur détectée est un défaut du récepteur (16) ou un défaut à l'extérieur du récepteur (16), en particulier un défaut de l'élément d'excitation (12) et/ou de la membrane (11).

11. Véhicule automobile (1) comprenant un dispositif de détection à ultrasons (2) selon l'une quelconque des revendications précédentes.

12. Procédé d'exploitation d'un dispositif de détection à ultrasons (2) d'un véhicule automobile (1), dans lequel des ondes ultrasonores sont émises et reçues au moyen d'une membrane (11), un signal de réception électrique est fourni lors de la réception des ondes ultrasonores et la membrane (11) est excitée afin d'émettre les ondes ultrasonores au moyen d'un élément d'excitation (12), des impulsions électriques sont délivrées à l'élément d'excitation (12) au moyen d'un émetteur (13), et le signal de réception électrique est reçu et mis en forme au moyen d'un récepteur (16), dans lequel le dispositif de détection à ultrasons (2) effectue un diagnostic du récepteur (16) et vérifie ainsi le récepteur (16) quant à son bon fonctionnement au moyen d'une unité de diagnostic (22), l'unité de diagnostic (22) étant conçue dans le cadre du diagnostic pour piloter l'émetteur (13) afin de délivrer au moins deux impulsions d'émission (24) l'une après l'autre et pour évaluer un signal de réponse (26) délivré par le récepteur (16) en réaction aux impulsions d'émission (24), **caractérisé en ce que** l'unité de diagnostic (22) est conçue lors du pilotage de l'émetteur (13) afin de délivrer les impulsions d'émission (24) pour modifier un facteur d'amplification (F1, F2, F3) d'un amplificateur (20) du récepteur (16) à chaque impulsion d'émission (24) et pour vérifier le signal de réponse (26) du récepteur (16) délivré en réaction aux impulsions d'émission (24) respectives quant à son niveau (28, 32).
